# EUROPEAN PATENT APPLICATION

(11) **EP 2 792 884 A1**
(43) Date of publication of application: **22.10.2014**
(21) Application number: 14163494.9
(22) Date of filing: 04.04.2014
(51) Int. Cl.: F04D 29/046, F04D 29/056, F16C 19/16, H02K 5/173

(54) **A centrifugal pump with four-point contact ball bearing**

(30) Priority: 19.04.2013 EP 13164522
(71) Applicant: Sulzer Pumpen AG, 8401 Winterthur (CH)
(72) Inventor: Manninen, Heikki, 35800 Mänttä (FI)
(74) Representative: Intellectual Property Services GmbH

(57) **Abstract**

The present invention relates to a novel bearing arrangement for a centrifugal pump. The bearing arrangement comprises a thrust bearing (50) arranged closer to the end (42') of the shaft (42) carrying the rotor (44), the thrust bearing (50) being selectable between a four-point contact ball bearing for heavy-duty applications and a single row contact ball bearing for light-duty applications

## Description

### Technical field

The present invention relates to a centrifugal pump and especially to a new kind of a bearing arrangement for a centrifugal pump and a novel bearing housing. Therefore, the present invention also relates to the shaft, the housing and the rotor of the centrifugal pump.

### Background art

In the following description of prior art and the present invention, a centrifugal pump and an impeller thereof have been discussed as an example. There are two basic types of centrifugal pumps with regard to its drive. A traditional type is a so-called "long- coupled" centrifugal pump where the shaft of the drive motor is coupled to the shaft of the centrifugal pump by means of a coupling. Another type is a so-called "close-coupled" centrifugal pump, which means that the centrifugal pump and the motor utilize the same shaft and the same bearings, as shown, for instance, in WO-A1-2009127781. The latter is, naturally, a preferred option nowadays, as fewer parts are needed in the pump-motor combination.

The long-coupled centrifugal pumps have, thus, a shaft supported on its own bearings whereas the drive motor has its own shaft on its own support bearings. Normally the bearings of the centrifugal pump have been arranged such that one of the bearings is designed to take care of the axial load, which means in practice, on the one hand, that the bearing has to be able to handle axial loads, and, on the other hand, that the bearing rings of the bearing handling the axial load are fastened immobile on the shaft and within the bearing housing. Naturally, the bearing carrying the axial load has to carry radial forces, too. The other bearing carrying merely radial loads is fastened immobile on the shaft but either the bearing itself allows axial movement between the bearing rings (slide bearings, for instance), or the outer bearing ring is able to slide axially within the bearing housing.

The bearing assembly carrying both axial and radial loads, i.e. the thrust bearing is most often formed of a pair of single row angular contact ball bearings arranged in back-to-back configuration. In place of angular contact ball bearings also tapered roller bearings have been used. Typically the bearing assembly is installed near the coupling i.e. close to the end of the shaft opposite to the rotor of the flow machine. The bearing carrying only radial loads is typically a single row ball bearing, or a roller bearing, or a slide bearing, and is typically arranged on the shaft closer to the rotor. The main reason for positioning the thrust bearing assembly farther away from the rotor is that in that way the radial forces affecting the thrust bearing assembly are smaller and in that way the bearing is not so highly stressed by forces in two dimensions. Thereby the bearing arranged closer to the rotor may be designed and chosen for absorbing the radial loads only.

CN 2447239 Y discusses a belt-driven pump the shaft of the pump being supported on bearings such that the bearing closer to the pump impeller is a ball bearing carrying the axial load and the bearing farther away from the impeller is a roller bearing carrying only the axial load. The Chinese document discusses, in connection with the axially supporting bearing, i.e. a thrust bearing, a four point contact bearing, which means basically an ordinary ball bearing having one inner ring, one outer ring and the bearing balls therebetween. The grooves in the inner and outer rings are formed such that they are substantially V-shaped whereby the balls run along a circular path on the faces of the V-shaped grooves. This construction makes it possible to call the bearing a four-point contact bearing. However, in accordance with the Chinese document the inner groove of the bearing is machined into the shaft surface and the assembly of the Chinese bearing allows only a limited number of balls to be inserted between the inner and the outer rings, whereby the load-carrying capacity of the bearing is limited.

However, the traditional bearing arrangement has a few drawbacks, which complicate the manufacture, assembly, use and maintenance of the centrifugal pumps.

Firstly, when the thrust bearing assembly is at the farther end of the shaft, i.e. opposite to the rotor, the heating of the shaft, when pumping or mixing hot medium causes the shaft to expand in axial direction resulting in the axial shift of the rotor. This is especially important to note in centrifugal pumps, where the gap between the pump housing and the impeller has to be designed to take into account the possible shift in the position of the impeller.

Secondly, depending on the requirements of the application the centrifugal pump is used the loads subjected to the bearing may vary a great deal. This means in practice that the radial and/or axial loads subjected in a certain application to a centrifugal pump may be two or three times higher than loads subjected in another application to a similar pump having identical construction. This kind of change in loads means that a bearing having a high load-carrying capacity is too heavy for a pump subjected to the lighter load. In other words, the bearings have to be changed to match the load conditions. But, when angular contact ball bearings are used, moving from a bearing designed to have a high load-carrying capacity to a bearing having a low load-carrying capacity means reduction in the dimensions, i.e. the outer diameter and the axial length of the bearing provided that the shaft is maintained the same. This means in practice that the pump manufacturer has two options, either to manufacture at least two different bearing housings for the different bearings or to manufacture fillings with which the smaller bearings may be fitted into the bearing housing dimensioned for the heaviest load, i.e. for the bearings a high load-carrying capacity. Both cases mean increased costs for the manufacture.

Thirdly, the basic construction of a traditional centrifugal pump has been such that the bearing housing is not attached directly to the pump housing but an intermediate cage type structure has been used. This means, in practice, firstly, that two different casting operations have been performed, and secondly, that due to the presence of two separate parts, the assembly takes time, and the risk of minor misalignment increases

Fourthly, angular contact ball bearings themselves have a drawback of their own, as, when in use, they tend to pump the lubricating oil from one side of the bearing to the opposite side thereof. This is especially true when two such bearings have been positioned in back-to-back configuration. The pumping of oil sets high demands on both the shaft sealing at a side of the bearing and the circulation passage returning oil back to the oil chamber.

The close-coupled centrifugal pumps aim, naturally, at a simplified construction and reduction in the costs of manufacture, assembly and maintenance of the centrifugal pumps, as a number of traditional components may be left out, like for instance the coupling, one shaft and two bearings. However, there are clear problems in the construction and use of close-coupled centrifugal pumps, too.

Firstly, the normal way of constructing, for instance, a close-coupled centrifugal pump is such that the centrifugal impeller is attached at the end of the shaft of the electric motor whereby the bearings of the electric motor have to be able to absorb both radial and axial loads subjected to the shaft of the motor. However, standard electric motors, which are, naturally, an attractive choice for driving centrifugal pumps due to their competitive price level, do not have a construction designed for handling the loads created by centrifugal pumps. Practice has shown that either the bearings wear out very quickly or the bearing housings of the electric motors break, as they are not sturdy enough to absorb the forces subjected to them.

Secondly, when driving the centrifugal pump the electric motor heats up whereby the shaft expands. This means that the rotor of the centrifugal pump arranged at the end of the shaft is moved farther away from the electric motor. In case of a centrifugal pump this means that a certain running clearance has to be reserved between the impeller and the pump housing on both sides of the impeller. In other words when the shaft is cold the impeller rear vanes must leave a gap between themselves and the back wall of the pump. In a similar manner the working vanes must leave a gap between themselves and the front wall of the pump housing when the shaft is hot. This means that, when the shaft is cold the gap between the working vanes and the front wall is not optimal, but larger whereby the efficiency of the pump is weaker than expected. In a similar manner the gap between the rear vanes and the back wall is too wide when the shaft is hot, whereby the rear vanes do not operate in the manner desired.

Thirdly, the running clearances of the bearings of an electric motor must be quite wide, of the order of 0,3 - 0,4 mm, when the bearings are arranged within the electric motor, as, again, the heating of an electric motor has to be taken into account. For the centrifugal pump, this means in practice, that the rotor of a centrifugal pump has to be provided quite wide radial and axial gaps at its perimeter so that the rotor is able to rotate without mechanical contact when starting the electric motor, i.e. when the bearings are cold.

### Brief summary of the Invention

Thus, an object of the present invention is to eliminate at least one of the above mentioned drawbacks or problems by means of a novel arrangement for supporting the shaft of a centrifugal pump.

Another object of the present invention is to develop a novel bearing housing structure applicable to both close-coupled and long-coupled centrifugal pumps.

A further object of the present invention is to suggest a novel bearing arrangement for a centrifugal pump.

A still further object of the present invention is to minimize the effects of temperature on the shaft of a centrifugal pump.

The characterizing features of the centrifugal pump in accordance with the present invention by means of which at least one of the above discussed problems are solved become apparent from the appended claims.

The present invention brings about a number of advantages, like for instance
- Simple construction of a centrifugal pump,
- One bearing housing applicable for both long- and close-coupled centrifugal pumps,
- One bearing housing without any fillings for both heavy and light loads, i.e. for bearings having a high load-carrying capacity and for bearings having a low load-carrying capacity,
- Cost efficient construction,
- Simpler shaft sealing at the drive end of the shaft,
- Smaller number of components, quicker assembly,
- Shorter shaft, less bending, less stress,
- Shorter pump housing or adapter to connect the centrifugal pump housing with the drive motor,
- Easy to control the running clearances of the rotor,
- Bearings with smaller running clearances may be used,
- Minimal temperature based changes in various clearances both in the centrifugal pump and in the shaft sealing,
- Improved efficiency of the flow machine, and
- Allows both oil and grease lubrication, which is not possible with the bearings of close coupled pumps.

As to the above listed advantages it should be understood that each embodiment of the invention may not lead to each and every advantage, but just a few of those.

### Brief Description of Drawing

The bearing arrangement as well as the bearing housing of the centrifugal pump of the present invention are described more in detail below, with reference to the accompanying drawings, of which
Figure 1 illustrates schematically as an example of a prior art centrifugal pump a partial cross section of a centrifugal pump,
Figure 2 illustrates schematically as an example of a novel centrifugal pump a partial cross section of a centrifugal pump including the bearing arrangement and the bearing housing in accordance with a preferred embodiment of the present invention, and Figure 3 illustrates schematically a partial cross section of the bearing assembly of Figure 2 in an enlarged scale.

### Detailed Description of Drawings

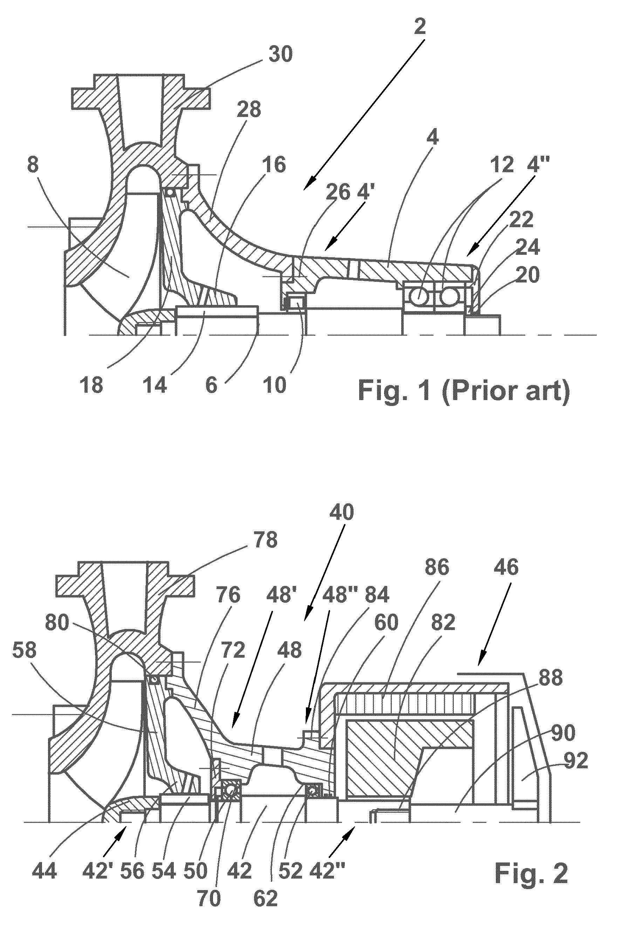

Figure 1 illustrates as an example of prior art a partial cross section of a centrifugal pump 2 provided with a traditional bearing arrangement and bearing housing 4. Figure 1 is a partial axial cross section of a centrifugal pump 2, which comprises a shaft 6 having a rotor 8, i.e. an impeller at its first axial end. The shaft 6 if supported by the bearing housing 4 having a first axial end 4' with a first bearing assembly 10 and a second axial end 4" with a second bearing assembly 12. The first bearing assembly 10 at the first end 4' of the bearing housing 4 is closer to the rotor 8 than the second bearing assembly 12 such that a shaft sealing 14 is arranged between the rotor 8 and the first bearing assembly 10. The shaft sealing 14 is arranged within a seal housing 16, which is a part of the rear wall 18 of the centrifugal pump 2. The second bearing assembly 12 is arranged at the second end 4" of the bearing housing 4 such that a sealing, preferably a labyrinth seal 20, in connection with the bearing cover 22, is arranged between the second bearing assembly 12 and the drive means (not shown) arranged at the end of the shaft 6. The first bearing assembly is a roller bearing 10 and has its inner bearing ring shrink-fitted on the shaft and its outer ring axially slidably on the bearing housing bore, whereby it is obvious that the first bearing assembly 10 does not absorb any axial forces subjected to the shaft 6. The second bearing assembly 12 comprises a pair of angular contact ball bearings arranged in back-to-back configuration. The inner bearing rings are shrink-fitted on the shaft 6, and additional secured in axial direction by means of a nut 24 threaded on the shaft. The outer ring of the second bearing assembly 12 is secured in a housing bore by means of a bearing cover 22 bolted to the end of the bearing housing 4. Thus the second bearing assembly 12 absorbs the axial loads subjected to the shaft 6 in addition to radial forces. At its first end 4' the bearing housing 4 is provided with means 26 for fastening an intermediate frame 28 to the bearing housing 4. The intermediate frame 28 connects the bearing housing 4 to the housing 30 of the centrifugal pump 2 at about the same radius as the rear wall 18 of the centrifugal pump is sealed (preferably, but not necessarily, by means of an O-ring arranged in an annular groove) to the housing 30 of the centrifugal pump 2. The fastening means 26 are bolts with which the intermediate frame 28 is attached to the bearing housing 4.

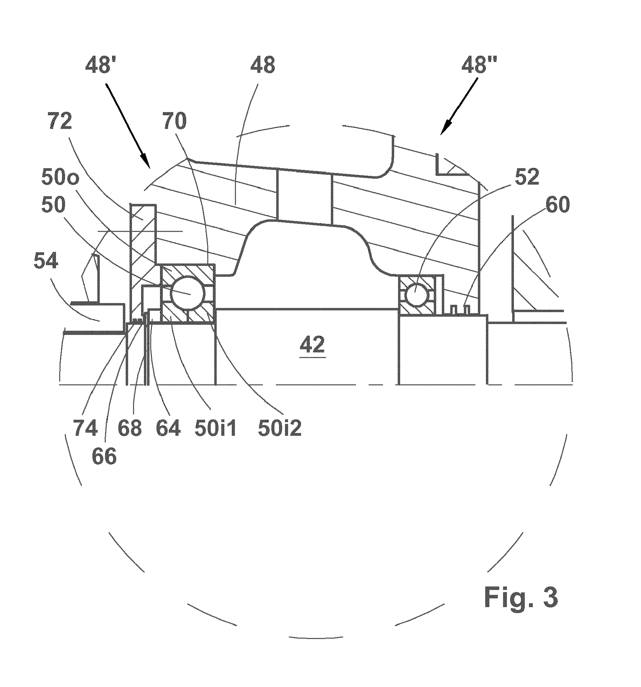

Figure 2 illustrates a partial axial cross section of a centrifugal pump 40 in accordance with a preferred embodiment of the present invention. The centrifugal pump 40 comprises a shaft 42 having a rotor 44, i.e. an impeller at its first axial end 42', and drive means, i.e. an electric drive motor 46 at its second axial end 42". The shaft 42 if supported by the bearing housing 48 having a first axial end 48' with a first bearing assembly 50 and a second axial end 48" with a second bearing assembly 52. The first bearing assembly 50 at the first end 48' of the bearing housing 48 is closer to the rotor 44 than the second bearing assembly 52 such that a shaft sealing 54 is arranged between the rotor 44 and the first bearing assembly 50. The shaft sealing 54 is arranged within a seal housing 56, which may be a part of the rear wall 58 of the centrifugal pump 40. The second bearing assembly 52 is arranged at the second end 48" of the bearing housing 48 such that a sealing, preferably a labyrinth seal 60, is arranged between the second bearing assembly 52 and the drive means 46. The second bearing assembly 52 has its inner ring shrink-fitted on the shaft 42 and its outer ring axially slidably on the bearing housing bore 62, whereby it is obvious that the second bearing assembly 52 does not absorb any axial forces subjected to the shaft 42. The first bearing assembly 50 is arranged such that its inner ring is shrink-fitted on the shaft 42, and additionally secured in axial direction by means of a distance ring 64 and a snap ring 66 arranged in an annular groove 68 on the shaft 42 (shown in more detail in Figure 3). The outer ring of the first bearing assembly 50 is secured in a housing bore 70 by means of a bearing cover 72 bolted on the bearing housing 48 at its first end 48'. Thus the first bearing assembly 50 absorbs, in addition to radial load, the axial load subjected to the shaft 42. At its first end 48' the bearing housing 48 is provided with an outwardly extending part 76 by means of which the bearing housing 48 is attached to the housing 78 of the centrifugal pump 40 at about the same radius as the rear wall 58 of the centrifugal pump 40 is sealed (preferably, but not necessarily) by means of an O-ring 80 arranged in an annular groove in the outer circumference of the back wall 58 to the housing 78 of the centrifugal pump 40. In accordance with an optional arrangement the rear wall 58 of the centrifugal pump 40 is secured by means of bolts (not shown) to the bearing housing 48.

The second end 42" of the shaft 42 is provided with means for driving the shaft 42 and the rotor 44 thereon. The driving means is, in this embodiment of the present invention an electric motor 46 that is arranged at the second ends 42" and 48" of the shaft 42 and the bearing housing 48. The electric motor 46 has a rotor 82 secured on the shaft 42 at its second end 42". The rotor is preferably, but not necessarily, attached on the shaft 42 by means of a taper drive sleeve. The bearing housing 48, on its part, is provided with means 84, for instance a radially outwardly extending flange, for fastening the stator 86 and frame of the electric motor 46 to the housing 48. In this embodiment of the preset invention the second end 42" of the shaft 42 is provided with a threaded central hole 88 for the shaft 90 of the fan impeller 92 arranged at the end of the electric motor 46 for circulating cooling air via the electric motor 46. Preferably, the central hole 88 is also provided with a guide sleeve for ensuring the correct axial alignment of the shaft 90. Naturally another option would be to extend the shaft 42 of the pump such that the fan impeller 92 could be arranged on the same shaft 42 as the rotor 44 of the centrifugal pump. However, in the latter case the shaft, due to its extension, is not any more applicable for use with a coupling or a belt drive.

Figure 3 illustrates the exemplary centrifugal pump of Figure 2 in an enlarged scale. The first bearing assembly 50 is arranged such that its inner ring is split, i.e. formed of two rings 50i₁ and 50i₂, and is shrink-fitted on the shaft 42, and additionally secured in axial direction by means of a distance ring 64 and a snap ring 66 arranged in an annular groove 68 on the shaft 42 (shown in more detail in Figure 3). Another option for securing the inner bearing ring on the shaft is to replace the snap ring and the distance ring with a lock nut and a lock washer (not shown). The outer ring 50o of the first bearing assembly 50 is secured in a housing bore 70 by means of a bearing cover 72 bolted on the first end 48' of the bearing housing 48. The bearing cover 72 is at its radially inner perimeter facing the shaft 42 provided with a sealing, preferably but not necessarily, a labyrinth seal 74.

The first bearing assembly is formed of a four-point contact ball bearing 50, i.e. a bearing having a split inner ring 50i, formed of two identical inner rings 50i₁ and 50i₂ facing one another and an outer ring 50o. Naturally, the bearing also includes a number of bearing balls between the inner and the outer rings. The four-point contact ball bearing is a specific form of a contact ball bearing, which has a specific property based on its construction. Now that the inner ring of the four-point contact ball bearing is split, i.e. made of two parts, the loading of the space between the inner and outer rings of the bearing with bearing balls is easier. In other words, the bearing balls may be positioned between the outer ring and a first inner ring, and after the space reserved for bearing balls is filled with balls a second inner ring may be positioned in its place. Thereby, the number of balls in a four-point contact ball bearing is much higher than that in an ordinary ball bearing. As a result, the load (both radial and axial) carrying capacity of the four-point contact ball bearings is much higher than that of a traditional ball bearing having only unitary inner and one unitary outer ring. Thereby the four-point contact ball bearings having a split6 inner ring may be used in applications requiring the use of bearings having a high load-carrying capacity.

However, as the dimensioning of a four-point contact ball bearing is equal with a traditional ball bearing the two bearings are interchangeable. In practice, this means that the same bearing housing may be used with a four-point contact ball bearing in heavy-duty applications and with an ordinary ball bearing in light-duty applications.

By constructing the bearing arrangement of a centrifugal pump in the above described manner the centrifugal pump may be adjusted to varying loads by selecting or choosing between two bearing types without a need to change the bearing housing or to use any specific fillings. In other words, a four point contact ball bearing may be used in heavy duty applications, and a traditional single row contact ball bearing in light-duty applications

As may be seen from the above description it has been possible to develop a novel bearing arrangement for a centrifugal pump, which bearing arrangement is very simple of its construction yet capable of performing its task as well as any other much more complicated bearing arrangement. The bearing assembly of the present invention is less expensive and requires less space than the prior art bearings, and the load carrying capacity of the bearing may be changed just by changing the bearing. For those reasons it is possible to use the same bearing housing in different loading conditions.

While the present invention has been herein described by way of examples in connection with what are at present considered to be the most preferred embodiments, it is to be understood that the invention is not limited to the disclosed embodiments, but is intended to cover various combinations and/or modifications of its features and other applications within the scope of the invention as defined in the appended claims.

## Claims

1. A centrifugal pump having a shaft (42) with a first end (42') and a second end (42"), a rotor (44) coupled to the first end (42') of the shaft (42), an electric motor (46) for driving the shaft (42) arranged at the second end (42") of the shaft (42), a bearing housing (48) supporting the shaft (48) by means of a first bearing assembly (52) and a second bearing assembly (52), the bearing assemblies (50, 52) carrying axial and radial loads subjected to the shaft (42), the first bearing assembly (50) being closer to the first end (42') of the shaft (42) than the second bearing assembly (52), the centrifugal pump (40) being further provided with a sealing means (54) positioned around the shaft (42) and between the rotor (44) and the first bearing assembly (50), the first bearing assembly (50) being a thrust bearing carrying axial loads subjected to the shaft (42), **characterized in that** the thrust bearing (50) is a four-point contact ball bearing having a split inner ring (50i₁, 50i₂) in applications where high load-carrying capacity is required, and a single row contact ball bearing in applications where low load-carrying capacity is required, whereby in both load conditions.
OR
that the same bearing housing (48) is used with the thrust bearing (50) being a four-point contact ball bearing having a split inner ring (50i₁, 50i₂) in applications where high load-carrying capacity is required, and with a single row contact ball bearing in applications where low load-carrying capacity is required.
OR
that the thrust bearing (50) is a four-point contact ball bearing having a split inner ring (50i₁, 50i₂).

2. The centrifugal pump as recited in claim 1, **characterized in that** the bearing housing (48) is, at its first end (48'), attached to a housing (78) of a centrifugal pump (40) and, at its second end (48"), to the electric motor (46).

3. The centrifugal pump as recited in claim 1 or 2, **characterized in that** the electric motor (46) has a rotor (82) and a stator (86), the rotor (82) being coupled to the shaft (42) of the centrifugal pump (40) and the stator (86) to the second end (48") of the bearing housing (48).

4. The centrifugal pump as recited in claim 3, **characterized in that** the rotor (82) is fixed on the shaft (42) by means of a taper drive sleeve.

5. The centrifugal pump as recited in claim 3, **characterized in that** the bearing housing (48) has at its second end (48") means (84) for fastening the stator (86) to the housing (48).

6. The centrifugal pump as recited in claim 1, **characterized in that** the second bearing assembly (52) is formed of a single row ball bearing or a roller bearing.

7. The centrifugal pump as recited in claim 3, **characterized in** a fan impeller (92) for cooling the electric motor (46), the impeller (92) being attached to an additional shaft (90).

8. The centrifugal pump as recited in claim 7, **characterized in that** the additional shaft is attached to the second end (42") of the shaft (42).

9. The centrifugal pump as recited in claim 1, **characterized in that** the first bearing assembly (50) is secured axially on the shaft (42) by means of a snap ring (66) and distance ring (64) or by means of a lock nut and a lock washer.

10. The centrifugal pump as recited in claim 1, **characterized in that** the shaft (42) is sealed by means of labyrinth seals (74) and (60) in a bearing cover (72) and the bearing housing (48).
